**Europäisches Patentamt**

(19) **European Patent Office**

**Office européen des brevets**

(11) Veröffentlichungsnummer: **0 031 136**
**B1**

(12) # EUROPÄISCHE PATENTSCHRIFT

(45) Veröffentlichungstag der Patentschrift:
01.02.84

(51) Int. Cl.³: **H 04 L 5/22**

(21) Anmeldenummer: **80107989.8**

(22) Anmeldetag: **17.12.80**

(54) Verfahren zur Übertragung von durch Start-Stop Signale gebildeten Daten in einem Zeitmultiplexsignal.

(30) Priorität: **21.12.79 DE 2951914**

(43) Veröffentlichungstag der Anmeldung:
**01.07.81 Patentblatt 81/26**

(45) Bekanntmachung des Hinweises auf die Patenterteilung:
**01.02.84 Patentblatt 84/5**

(84) Benannte Vertragsstaaten:
**AT BE CH FR GB IT LI NL SE**

(56) Entgegenhaltungen:
**DE - A - 2 437 390**
**DE - B - 2 712 775**
**DE - B - 2 740 997**

**NTZ NACHRICHTENTECHNISCHE ZEITSCHRIFT, Band 24, Heft 6, 1971 Berlin W. BARTEL, U. ASSMUS und H. HESSEN-MÜLLER "Eine Studie über Aufbausysteme für digitale Nachrichtenübertragung" Seiten 314-318 Siemens TELECOMREPORT, Jahrgang 1, Heft 3, Juni 1978, Siemens Aktiengesellschaft, Berlin und München W. BACHER und E. SCHENK "ZD 1000-C1 Zeitmultiplexsystem für Fernschreib- und Datenübertragung" Seiten 154-159**

(73) Patentinhaber: **SIEMENS AKTIENGESELLSCHAFT Berlin und München Wittelsbacherplatz 2, D-8000 München 2 (DE)**

(72) Erfinder: **Chaillié, Charles, Ing. grad., Isarweg 2, D-8031 Olching (DE)**
Erfinder: **Reisinger, Konrad, Dipl.-Ing., Bahnwiesenstrasse 5, D-8011 Zorneding (DE)**

# Verfahren zur Übertragung von durch Start-Stop-Signale gebildeten Daten in einem Zeitmultiplexsignal

Die Erfindung bezieht sich auf ein Verfahren zur Übertragung von durch Start-Stop-Signale gebildeten Daten in einem Zeitmultiplexsignal, welches in jeweils eine Mehrzahl von Zeichenrahmen umfassenden Zeitmultiplexrahmen gegliedert ist, wobei jeder Zeichenrahmen ein Startbit, ein oder mehrere Stopbits und dazwischen weitere Bits zur Übertragung der eigentlichen Nachricht enthält.

Wenn Daten von mehreren Datenquellen mit relativ geringen Bitraten abgegeben werden und einer Zentralstelle zugeleitet werden sollen, wäre es denkbar, diese Daten über je einen Zeitschlitz einer synchron betriebenen Zeitmultiplexstrecke zu übertragen. Dabei wäre jeder Datenquelle je ein Zeitschlitz fest zugeordnet, so daß an der Zentralstelle die Daten der einzelnen Datenquellen in stets gleichbleibender Reihenfolge und identifizierbar eintreffen. Damit wäre ein relativ großer Aufwand für die feste Zuordnung der einzelnen Datenquellen zu den Zeitschlitzen erforderlich. Es wäre auch denkbar, den einzelnen Teilnehmern Adressen zuzuordnen, und deren Daten gemeinsam mit den Adressen der einzelnen Datenquellen zu übertragen. Dabei wäre ein relativ großer Aufwand für die Adressen der einzelnen Datenquellen erforderlich.

Es ist nun auch schon eine Schaltungsanordnung zur empfangsseitigen Auswertung von Kennbits und zur Rahmensynchronisierung eines Zeitmultiplexsystems mit Hilfe fest vorgegebener Synchronisierworte bekannt (DE-B1-2 712 775), wobei das Zeitmultiplexsignal nach je p Bits ein Kennbit und pro Zeitmultiplexrahmen m Kennbits enthält, von denen s Kennbits das Synchronisierwort bilden. Mit Hilfe dieser bekannten Schaltungsanordnung ist es zwar möglich, die betreffenden Kennbits zur Rahmensynchronisierung eines Zeitmultiplexsystems auszunutzen. Über irgendwelche Maßnahmen zur Kennzeichnung der Zuordnung der einzelnen übertragenen Datensignale zu den zugehörigen Datenquellen ist in diesem Zusammenhang jedoch nichts bekannt.

Es ist im Zusammenhang mit einem Zeitmultiplexsystem für die Fernschreib- und Datenübertragung auch schon bekannt (Zeitschrift »Siemens Telcom Report 1 [1978] Heft 3, Seiten 154 bis 159), durch Start-Stop-Signale gebildete Fernschreibsignale nach dem Zeitmultiplexprinzip zu übertragen, gemäß dem sogenannten Grundrahmen vorgesehen sind, die jeweils in eine Anzahl von Unterrahmen unterteilt sind, und gemäß dem pro Unterrahmen ein Bit zur Synchronisierung verwendet wird. Über eine spezielle Art der Angabe der Zuordnung der einzelnen Fernschreibsignale zu den zugehörigen Fernschreibsignalsendern ist jedoch auch in diesem Zusammenhang nichts bekannt.

Aufgrund der bei den bisher bekannten Datenübertragungsverfahren angewandten Synchronisierungsmethoden ist es nicht ohne weiteres möglich, Datensignale mehrerer Datenquellen in rationaler Weise von Datenquellen zu einer Zentralstelle zu übertragen und zugleich Angaben über die Zuordnung der einzelnen Datensignale zu den einzelnen Datenquellen bereitzustellen.

Der Erfindung liegt demgemäß die Aufgabe zugrunde, einen Weg zu zeigen, wie bei einem Verfahren der eingangs genannten Art vorzugehen ist, um Daten mehrerer Datenquellen in rationeller Weise einer Zentralstelle zuzuleiten und zugleich Angaben über die Zuordnung der einzelnen Datensignale zu den einzelnen Datenquellen bereitzustellen.

Gelöst wird die vorstehend aufgezeigte Aufgabe bei einem Verfahren der eingangs genannten Art erfindungsgemäß durch die Merkmale des Kennzeichens des Anspruches 1.

Die Erfindung bringt den Vorteil mit sich, daß auf relativ einfache und billige Weise Daten über weitverbreitete Übertragungsstrecken übertragen werden können, wobei zugleich eine Angabe über die Zuordnung der einzelnen Datensignale zu den einzelnen Datenquellen bereitgestellt ist. Damit können insbesondere die Datenbits mit Hilfe der Start-Stop-Signale über zeichengebundene Übertragungsstrecken übertragen werden, die üblicherweise zur Übertragung von Fernschreibsignalen dienen. Die Start-Stop-Signale können aber auch über Wechselstrom-Telegrafiekanäle übertragen werden.

Um besonders bewährte und weitverbreitete Übertragungskanäle verwenden zu können, ist es zweckmäßig, daß der Zeichenrahmen an einer ersten Bitstelle ein Startbit, an einer siebten Bitstelle ein Stopbit und an einer der dazwischenliegenden Stellen das Kennbit enthält und daß an den übrigen vier Bitstellen zwischen dem Startbit und dem Stopbit die Datenbits mehrerer Datenquellen übertragen werden.

Um eine verlorengegangene Zuordnung der von den Datenquellen stammenden Datenbits zu den Bitstellen des Start-Stop-Signals schnell wieder herzustellen, ist es zweckmäßig, daß an den für die Kennbits vorgesehenen Bitstellen der Zeichenrahmen eine periodisch wiederkehrende Folge von $2^m$ Kennbits übertragen wird, von denen je m aufeinanderfolgende Kennbits die Zuordnung der Datenbits zu den Datenquellen signalisieren. Die Verwendung einer derartigen Folge von Kennbits zeichnet sich dadurch aus, daß eine Vortäuschung einer falschen Zuordnung — durch gelegentlich gestörte Kennbits — schnell durch die nächsten m ungestörten Kennbits signalisiert wird.

Trotz der weiten Verbreitung der mit Start-Stop-Signalen arbeitenden Übertragungskanäle kann es vorkommen, daß die Datenbits der Datenquellen entweder nur über eine taktgebundene Übertragungsstrecke zu übertragen sind, oder sowohl über eine Start-Stopsignal-Übertragungsstrecke als auch über eine taktgebundene Übertragungsstrecke zu übertragen sind. Unter diesen Voraussetzungen, ist es zweckmäßig, daß der Zeichenrahmen acht Bitstellen enthält mit je einem Stopbit an der siebten und achten Bitstelle und daß die Datenbits im Rahmen des Start-Stopsignals über eine taktgebundene Übertragungsstrecke übertragen werden.

Im folgenden werden Ausführungsbeispiele der Erfindung anhand der Figuren 1 bis 3 beschrieben, wobei in mehreren Figuren dargestellte gleiche Gegenstände mit gleichen Bezugszeichen bezeichnet sind. Es zeigt

Fig. 1 ein Zeitmultiplex-Datenübertragungssystem,

Fig. 2 ein Zeitmultiplexsignal in Form eines Start-Stopsignals, mit Hilfe dessen Datenbits mehrerer Datenquellen übertragen werden können,

Fig. 3 ein Blockschaltbild eines Multiplexers, mit Hilfe dessen das Zeitmultiplexsignal in Form des Start-Stopsignals erzeugt wird.

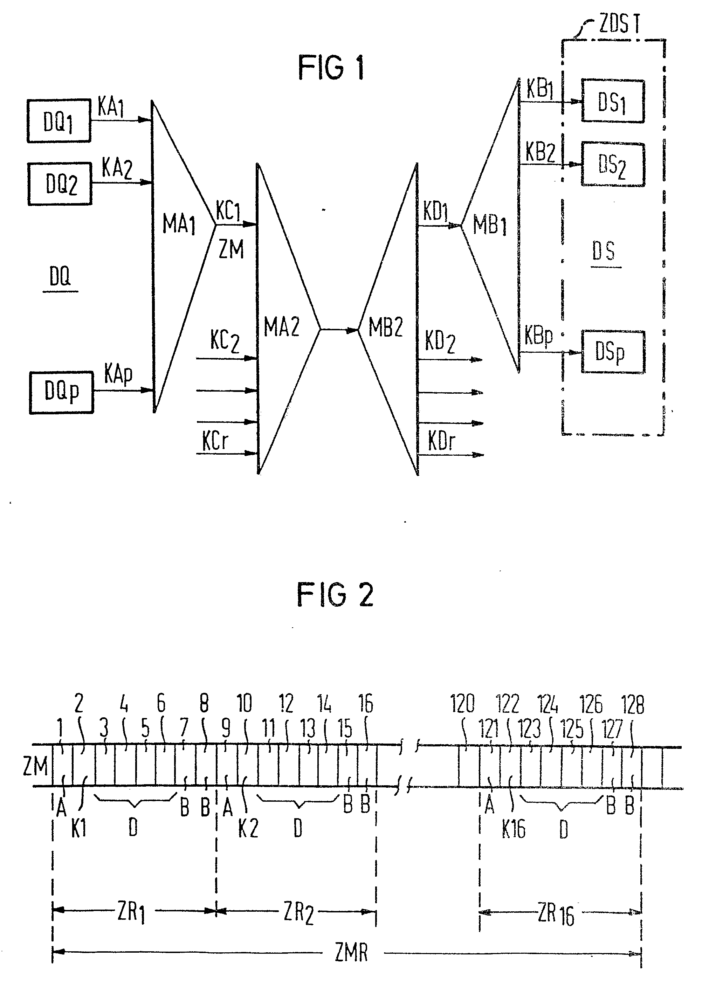

Fig. 1 zeigt mehrere Datenquellen DQ1, DQ2 ... DQp, die über die Kanäle KA1, KA2 ... KAp Daten an den Multiplexer MA1 abgeben. Diese Daten sollen entweder den Datensenken DS1, DS2 ... DSp oder der zentralen Datenstation ZDST zugeleitet werden.

Es wäre denkbar, den einzelnen Datenquellen DQ1, DQ2 ... DQp je einen Zeitschlitz des Zeitmultiplexsignals ZM mit Hilfe der Multiplexer MA1 und MB1 zuzuordnen. Dadurch könnten die Daten der Datenquellen der Reihe nach den Datensenken zugeführt werden und im Bereich der zentralen Datenstation ZDST wäre jeder der Kanäle KB1 bis KBp genau einer der Datenquellen DQ1 bis DQp in umkehrbar eindeutiger Weise zugeordnet. Ein derartiges System würde jedoch einen relativ großen Aufwand für eine taktgebundene Übertragungsstrecke zur synchronen Übertragung der Daten von den Kanälen KA1 ... KAp zu den entsprechenden Kanälen KB1 ... KBp erfordern.

Es wäre auch denkbar, den Datenquellen DQ je eine Adresse zuzuordnen und die anfallenden Daten mit der zugehörigen Adresse über die Multiplexer MA1, MA2, MB2, MB1 zur zentralen Datenstation ZDST zu übertragen.

Bei einem derartigen System würde ein relativ hoher Anteil der Übertragungskapazität zur Übertragung der vielen Adressen benötigt werden, wodurch der Wirkungsgrad dieses Systems herabgesetzt wird.

Dem in Fig. 1 dargestellten Zeitmultiplexsystem liegt der Gedanke zugrunde, die preisgünstigen und zuverlässigen Start-Stopkanäle der übergeordneten Multiplexer MA2 und MB2 zur Übertragung der Daten der Datenquellen DQ zu benutzen. Dabei können die beiden übergeordneten Multiplexer MA2 und MB2 räumlich weit entfernt voneinander arbeiten und mit nicht dargestellten Übertragungseinrichtungen bestückt sein. Die Start-Stopkanäle KC2 bis KCr und KD2 bis KDr dienen zur Übertragung von Fernschreibzeichen. Derartige Fernschreibzeichen können aus einem Startbit, aus einem verlängerten Stopbit und aus mehreren Informationsbits zur Übertragung der eigentlichen Nachricht bestehen. Dabei ist jeder Start-Stopkanal an je eine einzige, in der Figur nicht dargestellte, Datenquelle in Form eines Fernschreibers angeschlossen. Anstelle der Fernschreiber könnten auch andere Datenquellen angeschlossen sein, welche je Start-Stopsignale abgeben.

Der Start-Stopkanal KC1 ist an den Ausgang des Multiplexers MA1 angeschlossen. Das vom Multiplexer MA1 abgegebene Zeitmultiplexsignal ZM hat zwar die Form eines Start-Stopsignals, ist aber nicht nur einer einzigen Datenquelle zugeordnet, sondern den Datenquellen DQ1 bis DQp.

Fig. 2 zeigt Details des Zeitmultiplexsignals ZM. Dabei wird angenommen, daß mit p=64 insgesamt 64 Datenquellen DQ vorhanden sind, deren Datenbits D mit Hilfe des Zeitmultiplexsignals ZM zu übertragen sind. Dieses Zeitmultiplexsignal ZM gliedert sich in 16 Zeichenrahmen ZR1, ZR2 ... ZR16. Diese Zeichenrahmen bilden insgesamt den Zeitmultiplexrahmen ZMR.

Der Zeichenrahmen ZR1 enthält an der ersten Bitstelle 1 ein Startbit A, enthält an der Bitstelle 2 das Kennbit K1, enthält an den Bitstellen 3, 4, 5, 6 insgesamt vier Datenbits D und enthält an den Bitstellen 7 und 8 je ein Stopbit B. Die weiteren Zeichenrahmen ZR2 bis ZR16 enthalten ebenfalls je ein Startbit A, je vier Datenbits D und je zwei Stopbits B. Beispielsweise enthält der Zeichenrahmen ZR2 bzw. ZR16 an der Bitstelle 9 bzw. 121 das Startbit A, an der Bitstelle 10 bzw. 122 das Kennbit K2 bzw. K16, an den Bitstellen 11, 12, 13, 14 bzw. 123, 124, 125, 126 die Datenbits D und an den Bitstellen 15, 16 bzw. 127, 128 die Stopbits B. Das Zeitmultiplexsignal ZM hat somit die Form eines Start-Stopsignals.

Mit dem Zeitmultiplexsignal ZM wird somit pro Zeitmultiplexrahmen je ein Kennbit übertragen, das zwischen einem Startbit A und zwischen einem Stopbit B liegt. Diese Kennbits müßten nicht direkt im Anschluß an die Startbits A übertragen werden. Unter Zugrundelegung des Zeichenrahmens ZR1 könnte das Kennbit K1 beispielsweise auch an der Bitstelle 5 übertragen werden. In diesem Falle würden zwischen der Bitstelle 1 und der Bitstelle 7 an den verbleibenden Bitstellen 2, 3, 4 und 6 die Datenbits D der Datenquellen übertragen werden. Ähnliche Ausführungen gelten für alle Zeichenrahmen ZR2 bis ZR16.

Beim vorliegenden Ausführungsbeispiel wird angenommen, daß die Bitstellen 3, 4, 5, 6, 11, 12, 13, 14 ... 123, 124, 125, 126 der Reihe nach je den Datenquellen DQ1 bis DQp mit p=64 zugeordnet sind. Die Kennbits K1 bis K16 haben die Aufgabe, diese Zuordnung im Bereich der zentralen Datenstation ZDST zu signalisieren. Das Kennbit K1 könnte beispielsweise den Binärwert 1 haben und die Kennbits K2 bis K16 könnten je die Binärwerte 0 annehmen. Daraus könnte man an der zentralen Datenstation ZDST entnehmen, daß unmittelbar im Anschluß an das Kennbit $K1=1$ an der Bitstelle 3 als Datenbit der Datenquelle DQ1 erscheint und daß an den weiteren Bitstellen 4, 5 ... die Datenbits der weiteren Datenquellen DQ2 bis DQp empfangen werden. Auf diese Weise könnte also prinzipiell die Zuordung der einzelnen Datenquellen zu den Bitstellen des Start-Stopsignals signalisiert werden.

Beim vorliegenden Ausführungsbeispiel wird in anderer Weise vorgegangen. Es wird eine Folge von 16 periodisch wiederkehrenden Kennbits K1 bis K16 verwendet, von denen je vier den zugehörigen Zeichenrahmen und jene vier Bitstellen signalisieren, welche die Datenbits D von je vier Datenquellen übertragen. Beispielsweise kann die Folge der Kennbits K1 bis K16 aus der Folge 1101011110010000 gebildet werden. Diese Folge von Kennbits ist den Zeichenrahmen ZR1 bis ZR16 zugeordnet. Die gleiche Folge von Kennbits ist in periodischer Weise auch den folgenden 16 Zeichenrahmen zugeordnet. Je vier Kennbits der angegebenen Folge kennzeichnen einen speziellen Zeichenrahmen. Beispielsweise könnten die Kennbits 0000 den Zeichenrahmen ZT1 und die Kennbits 0001 den Zeichenrahmen ZR2 signalisieren. In etwas allgemeiner Ausdruckweise wird an den für die Kennbits vorgesehenen Bitstellen der Zeichenrahmen eine periodisch wiederkehrende Folge von $2^m$ Kennbits übertragen, von denen je m aufeinanderfolgende Kennbits die Zuordnung der nachfolgenden Bitstellen zu den Datenquellen signalisieren. Im vorliegenden Falle werden mit $m=4$ je vier Kennbits zur Kennzeichnung der Zeichenrahmen verwendet. Falls einer dieser vier Kennbits gestört empfangen wird, dann wird eine falsche Zuordnung vorgetäuscht. Dies wird jedoch sehr schnell durch die nächsten vier richtig empfangenen Kennbits korrigiert. Die hier beschriebene Signalisierung der Zuordnung erweist sich somit sehr stabil gegenüber gestörten Kennbits. Im Rahmen eines Start-Stopsignals wäre es zulässig, wenn an den Bitstellen 7, 15, ... 127 verlängerte Stopschritte übertragen würden, so daß die Bitstellen 8, 16, ... 128 nur je einen Bruchteil einer Bitdauer in Anspruch nehmen. In manchen Fällen ist es aber vorteilhaft, wenn alle Bits des in Fig. 2 darstellten Zeitmultiplexsignals ZM die gleiche Bitdauer haben, weil ein derartiges Zeitmultiplexsignal ZM nicht nur über Start-Stopkanäle, sondern auch über taktgebundene Übertragungsstrecken übertragen werden kann.

Zwischen der Anzahl p der Datenquellen DQ und der Anzahl der pro Zeiteinheit übertragenen Bits des Zeitmultiplexsignals ZM bestehen gewisse Zusammenhänge. Es wird angenommen, daß mit dem Zeitmultiplexsignal ZM n Bits pro Sekunde übertragen werden können. Die Zahl n wird als Telegrafiergeschwindigkeit bezeichnet und in Baud angegeben. Beispielsweise kann es sich mit $n=50$ um einen 50 Bd Kanal handeln. Pro Zeichenrahmen werden $s=8$ Bits übertragen. Pro Sekunde werden n/s Zeichen übertragen. Jedes Zeichen enthält bei vorliegendem Ausführungsbeispiel $u=4$ Datenbits. Pro Sekunde werden also n mal u/s Datenbits D mit Hilfe des Zeitmultiplexsignals ZM übertragen. Mit $n=50$, mit $s=8$ und mit $u=4$ werden pro Sekunde die Daten von 50mal $4/8=25$ Datenquellen mit Hilfe des Zeitmultiplexsignals ZM übertragen. Dies unter der Voraussetzung, daß alle Datenquellen ihre Daten mit gleicher Telegrafiergeschwindigkeit abgeben und daß pro Datenquelle zeitlich nacheinander genau ein Datenbit D im Rahmen des Zeitmultiplexsignals ZM übertragen wird.

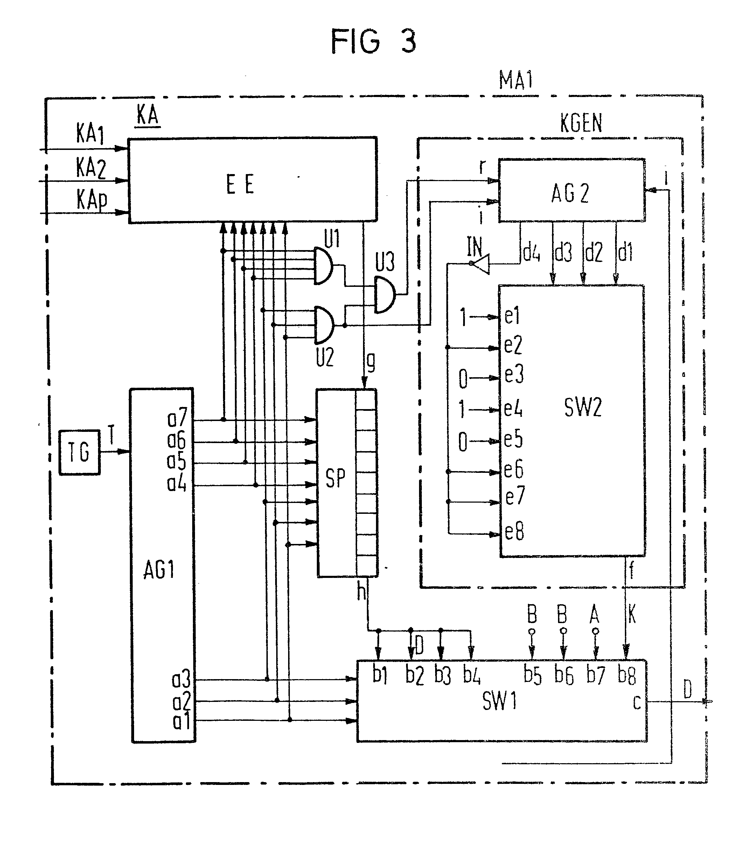

Fig. 3 zeigt ein Ausführungsbeispiel des Multiplexers MA1. Der Taktgeber TG erzeugt den Bittakt T, der dem Adressengeber AG1 zugeführt wird. Dieser Adressengeber erzeugt die den Datenquellen DQ zugeordneten Adressen; bei vorliegendem Ausführungsbeispiel erzeugt er 64 Adressen, die aus den Bits a1, a2, a3, a4, a5, a6, a7 gebildet werden.

Die von den Datenquellen DQ gelieferten Daten D werden über die Kanäle KA der Einphaseneinrichtung EE zugeführt, die während der Dauer des in Fig. 2 dargestellten Zeitmultiplexrahmens je ein Bit pro Datenquelle an den Speicher SP abgibt. Diese Einphaseinrichtung EE wird als an sich bekannt vorausgesetzt und ist an die von den Datenquellen abgegebenen Daten angepaßt. Beispielsweise kann angenommen werden, daß die Daten der Datenquellen alle mit der gleichen Bitrate abgegeben werden und daß die Bits der Datenquellen innerhalb ein und desselben Bitrasters liegen. Es wäre aber auch denkbar, daß die Bitraster der einzelnen Datenquellen phasenmäßig gegeneinander verschoben sind. Es wäre auch denkbar, daß die Einphaseinrichtung EE Taktimpulse an die einzelnen Datenquellen DQ abgibt und damit die Daten dieser Datenquellen abruft.

Der Speicher SP wird mit den Adressen des Adressengebers AG1 adressiert und besitzt ebensoviele Speicherzellen als Datenquellen vorgesehen sind. In jeder dieser Speicherzellen wird je ein Datenbit D gespeichert, das einer der Datenquellen zugeordnet ist. Bei vorliegendem Ausführungsbeispiel sind somit 64 Speicherzellen vorgesehen. Wenn ein Schreibbefehl vorliegt, wird über den Eingang g das Datenbit der adressierten Datenquelle in den Speicher SP übernommen und wenn ein Lesebefehl vorliegt, wird über den Ausgang h ein Datenbit der adressierten Speicherzelle abgegeben.

Das Schaltwerk SW1 wird mit den Bits a1, a2, a3 gesteuert und verbindet jeweils einen der Eingänge b1 bis b8 mit dem Ausgang c; dies zeigt im Detail die Tabelle 1. Mit a3, a2, $a3=001$ ist beispielsweise der Eingang b1 mit dem Ausgang c verbunden. Es wird angenommen, daß während der in Fig. 2 dargestellten Bitstellen 3, 4, 5, 6 zeitlich nacheinander die Adressen 001. 010, 011, 100 aufgerufen und die Eingänge b1, b2, b3, b4 mit dem Ausgang c verbunden werden. Auf diese Weise werden insgesamt vier Bits der Datenquellen DQ in das Zeitmultiplexsignal ZM eingefügt. An den Eingängen b5 und b6 liegen dauernd die Stopbits B an. Bei Aufruf der Adressen a3, a2, a1 = 101 bzw. 110 werden daher über die Eingänge b5 bzw. b6 die Stopbits B über den Ausgang c abgegeben. Am Eingang b7 liegt dauernd das Startbit A an. Bei Aufruf der Adresse A3, A2, A1 = 111 wird daher das Startbit A über den Eingang b7 an den Ausgang c abgegeben. Anschließend an die Startbits A werden jeweils Kennbits K in das Zeitmultiplexsignal ZM eingefügt. Diese Kennbits K liegen am Eingang b8 an und werden mit der Adresse a3, a2, a1 = 000 an den Ausgang c weitergegeben.

Tabelle 1

| a3 | a2 | a1 | c |
|----|----|----|----|
| 0 | 0 | 1 | b1 |
| 0 | 1 | 0 | b2 |
| 0 | 1 | 1 | b3 |
| 1 | 0 | 0 | b4 |
| 1 | 0 | 1 | b5 |
| 1 | 1 | 0 | b6 |
| 1 | 1 | 1 | b7 |
| 0 | 0 | 0 | b8 |

Da die Adressen a3, a2, a1 periodisch erzeugt werden, gibt das Schaltwerk SW1 periodisch je vier Datenbits D, je zwei Stopbits B, je ein Startbit A und je ein Kennbit K ab. Dabei sind die einzelnen Datenbits D zeitlich nacheinander je verschiedenen Datenquellen zugeordnet. Während der Dauer des in Fig. 2 dargestellten Zeitmultiplexrahmens ZMR werden aber alle 64 Bits der 64 Datenquellen in das Zeitmultiplexsignal D eingefügt. Insgesamt enthält der Zeitmultiplexrahmen ZMR 128 Bits, weil außer den Datenbits D auch die Startbits A, die Stopbits B und die Kennbits K innerhalb des Zeitmultiplexrahmens auftreten.

Die Kennbits K werden mit dem Kennbitgenerator KGEN erzeugt, der aus dem Adressengeber AG2, aus dem Inverter IN und aus dem Schaltwerk SW2 gebildet wird. Als Adressengeber AG2 kann ein Binärzähler vorgesehen sein, der über das UND-Glied U2 und über den Eingang i immer dann einen Zählimpuls erhält, wenn die Adresse a3, a2, a1 = 111 auftritt. Der Adressengeber AG2 gibt die Adressen d4, d3, d2. d1 ab, die auch in Tabelle 2 aufgelistet sind. Die Tabelle 2 zeigt auch die Folge der zu erzeugenden Kennbits K.

Tabelle 2

| d4 | d3 | d2 | d1 | f | K |
|----|----|----|----|----|----|
| 0 | 0 | 0 | 1 | e1 | K1 = 1 |
| 0 | 0 | 1 | 0 | e2 | K2 = 1 |
| 0 | 0 | 1 | 1 | e3 | K3 = 0 |
| 0 | 1 | 0 | 0 | e4 | K4 = 1 |
| 0 | 1 | 0 | 1 | e5 | K5 = 0 |
| 0 | 1 | 1 | 0 | e6 | K6 = 1 |
| 0 | 1 | 1 | 1 | e7 | K7 = 1 |
| 0 | 0 | 0 | 0 | e8 | K8 = 1 |
| 1 | 0 | 0 | 1 | e1 | K9 = 1 |
| 1 | 0 | 1 | 0 | e2 | K10 = 0 |
| 1 | 0 | 1 | 1 | e3 | K11 = 0 |
| 1 | 1 | 0 | 0 | e4 | K12 = 1 |
| 1 | 1 | 0 | 1 | e5 | K13 = 0 |
| 1 | 1 | 1 | 0 | e6 | K14 = 0 |
| 1 | 1 | 1 | 1 | e7 | K15 = C |
| 1 | 0 | 0 | 0 | e8 | K16 = 0 |

Das Schaltwerk SW2 verbindet in Abhängigkeit von den Adressen d3, d2, d1 zeitlich nacheinander die Eingänge e1 bis e8 mit dem Ausgang f. An die Eingänge e1 und e4 ist dauernd ein Signalgeber angeschlossen, der ein Signal entsprechend einem 1-Wert abgibt. An den Eingängen e3 und e5 ist dauernd ein Signalgeber angeschlossen, der ein Signal entsprechend einem 0-Wert abgibt. An den Eingängen e2, e6, e7, e8 liegen die mit Hilfe des Inverters IN invertierten Binärwerte d4. Die Kennbits K1 und K9 werden immer dann abgegeben, wenn mit der Adresse d3, d2, d1 = 001 der Eingang e1 mit dem Ausgang f verbunden ist. Die Kennbits K2 bzw. K10 werden immer dann abgegeben, wenn die Adresse d3, d2, d1 = 010 anliegt und der Eingang e2 mit dem Ausgang f verbunden ist. Mit d4 = 0 bzw. mit d4 = 1 ergeben sich die entsprechend invertierten Binärwerte 1 bzw. 0 der Kennbits K2 bzw. K10. Die Kennbits K3 und K11 bzw. K5 und K13 werden über die Eingänge e3 und e5 bei Aufruf der Adressen 011 bzw. 101 abgegeben. Die Kennbits K4 und K12 werden bei Aufruf der Adressen 100 abgegeben. Die Kennbits K6 und K14 bzw. K7 und K15 bzw. K8 und K16 werden bei Aufruf der Adressen 110 bzw. 111 bzw. 000 abgegeben.

Der Adressengeber AG2 wird mit Hilfe der UND-Glieder U1, U2, U3 immer dann zurückgesetzt, wenn der Adressengeber AG1 die Adresse a7, a6, a5, a4, a3, a2, a1 = 1111111 abgibt. Ein dieser Adresse entsprechendes Signal wird über den Ausgang des UND-Gliedes U3 an den Rücksetzeingang r des Adressengebers AG2 abgegeben.

Bei dem anhand der Fig. 3 beschriebenen Ausführungsbeispiel wurden Datenquellen vorausgesetzt, die ihre Daten alle mit der gleichen Bitrate pro Sekunde abgeben. Es wäre grundsätzlich denkbar, daß Datenquellen vorgesehen sind, deren Daten mit unterschiedlichen Bitraten abgegeben werden. Beispielsweise wäre es denkbar, daß von insgesamt 63 Datenquellen die erste Datenquelle ihre Daten mit der doppelten Geschwindigkeit bzw. mit der doppelten Bitrate abgibt im Vergleich zu den übrigen Datenquellen. In diesem Fall könnten innerhalb des in Fig. 2 dargestellten Zeitmultiplexrahmens ZMR zwei Zeitschlitze für die Daten der ersten Datenquelle reserviert werden, wogegen allen übrigen Datenquellen nur ein einziger Zeitschlitz zugeordnet ist. Die in Fig. 3 dargestellte Einphaseneinrichtung EE würde wieder in an sich bekannter Weise pro Zeitmultiplexrahmen 64 Bits liefern, wobei nun aber der Adressengeber AG1 die Adresse der ersten Datenquelle zweimal pro Zeitmultiplexrahmen abgeben müßte.

## Patentansprüche

1. Verfahren zur Übertragung von durch Start-Stop-Signale gebildeten Daten in einem Zeitmultiplexsignal (ZM), welches in jeweils eine Mehrzahl von Zeichenrahmen (ZR1 bis ZR16) umfassenden Zeitmultiplexrahmen (ZMR) gegliedert ist, wobei jeder Zeichenrahmen (ZR1 bis ZR16) ein Startbit (A), ein oder mehrere Stopbits (B) und dazwischen weitere Bits (D) zur Übertragung der eigentlichen Nachricht enthält, dadurch gekennzeichnet, daß pro Zeichenrahmen (ZR1 bis ZR16) zwischen einem Startbit (A) und einem Stopbit (B) ein Kennbit (K) übertragen wird,
daß an den zwischen dem Startbit (A) und dem Stopbit (B) verbleibenden Bitstellen Datenbits (D) mehrerer Datenquellen (DQ) übertragen werden
und daß jeweils die Kennbits (z. B. K1 bis K4) einer Mehrzahl aufeinanderfolgender Zeichenrahmen (ZR1 bis ZR4), die kleiner ist als die Gesamtzahl der einen Zeitmultiplexrahmen (ZMR) bildenden Zeichenrahmen (ZR1 bis ZR16), die einzelnen Zeichenrahmen (ZR1 bis ZR16) identifizieren und damit die Zuordnung der von den Datenquellen (DQ) stammenden Datenbits (D) zu den Bitstellen des jeweiligen Start-Stop-Signals (ZM) signalisieren (Fig. 1 und 2).

2. Verfahren nach Anspruch 1, dadurch gekennzeichnet, daß der Zeichenrahmen (ZR) an einer ersten Bitstelle ein Startbit (A), an einer siebten Bitstelle ein Stopbit (B) und an einer der dazwischenliegenden Bitstellen das Kennbit (K) enthält und daß an den übrigen vier Bitstellen zwischen dem Startbit (A) und dem Stopbit (B) die Datenbits (D) mehrerer Datenquellen (DQ) übertragen werden. (Fig. 2).

3. Verfahren nach Anspruch 1, dadurch gekennzeichnet, daß an den für die Kennbits (K) vorgesehenen Bitstellen der Zeichenrahmen (ZR) eine periodisch wiederkehrende Folge von $2^m$ Kennbits (K1 bis K16) übertragen wird, von denen je m aufeinanderfolgende Kennbits die Zuordnung der Datenbits (D) zu den Datenquellen (DQ) signalisieren (Fig. 2).

4. Verfahren nach Anspruch 1, dadurch gekennzeichnet, daß der Zeichenrahmen (ZR) acht Bitstellen enthält mit je einem Stopbit an der siebten und achten Bitstelle.

## Claims

1. Method for the transmission of data items formed by start-stop signals in a t.d.m. signal (ZM) which is classified into t.d.m. frames (ZMR), each of which comprises a plurality of character frames (ZR1 to ZR16), wherein each character frame (ZR1 to ZR16) contains one start bit (A), one or more stop bits (B) and, between these, further bits (D) for the transmission of the actual communication, characterised in that in respect of every character frame (ZR1 to ZR16) one code bit (K) is transmitted between one start bit (A) and one stop bit (B),
that data bits (D) from a plurality of data sources (DQ) are transmitted at the bit locations which remain between the start bit (A) and the stop bit (B),
and that the code bits (e.g. K1 to K4) of a plurality of consecutive character frames (ZR1 to ZR4), which is smaller than the total number of the character frames (ZR1 to ZR16) which form one t.d.m. frame (ZMR) identify the individual character frames (ZR1 to ZR16) and thus signal the assignment of the data bits (D) emanating from the data sources (DQ) to the bit locations of the relevant start-stop signal (ZM) (Figures 1 and 2).

2. Method as claimed in claim 2, characterised in that at a first bit location the character frame (ZR) contains a start bit (A), at a seventh bit location it contains a stop bit (B), and at one of the bit locations located in between it contains the code bit (K), and that at the other four bit locations between the start bit (A) and the stop bit (B) the data bits (D) of a plurality of data sources (DQ) are transmitted (Figure 2).

3. Method as claimed in claim 1, characterised in that in those bit locations of the character frames (ZR) which are provided for the code bits (K) a periodically recurring sequence of $2^m$ code bits (K1 to K16) is transmitted, of which every m consecutive code bits signal the assignment of the data bits (D) to the data sources (DQ) (Figure 2).

4. Method as claimed in claim 1, characterised in that the character frame (ZR) contains eight bit locations with one stop bit in the seventh and eighth bit locations respectively.

## Revendications

1. Procédé pour la transmission de données formées par des signaux arythmiques, dans un signal de multiplexage par répartition dans le temps (ZM) qui est articulé en trames de multiplexage par répartition dans le temps (ZMR) comprenant respectivement un grand nombre de trames de signaux (ZR1 à ZR16), chaque trame de signaux (ZR1 à ZR16) comportant un bit de départ (A), un ou plusieurs bits d'arrêt (B) et entre ceux-ci d'autres bits (D) pour la transmission du message proprement dit, caractérisé par le fait que pour chaque trame de signaux (ZR1 à ZR16) un bit caractéristique (K) est transmis entre un bit de départ (A) et un bit d'arrêt (B), qu'aux emplacements de bit restant entre le bit de départ (A) et le bit d'arrêt (B) sont transmis des bits de données (D) de plusieurs sources de données (DQ), et que les bits caractéristiques (par ex. K1 à K4) d'un grand nombre de trames di signaux successives (ZR1 à ZR4), qui est plus faible que le nombre total des trames de signaux (ZR1 à ZR16) formant une trame de multiplexage par répartition dans le temps (ZMR), identifient les trames de signaux individuelles (ZR1 à ZR16) et par conséquent signalent l'association des bits de données (D) provenant des sources de données (DQ) aux emplacements de bit du signal arythmique respectif (ZM).

2. Procédé suivant la revendication 1, caractérisé par le fait que la trame de signaux (ZR) comporte un bit de départ (A) à un premier emplacement de bit, un bit d'arrêt (B) à un septième emplacement de bit, et le bit caractéristique (K) à un des emplacements de bit situé entre les deux, et que les bits de données (D) de plusieurs sources de données (DQ) sont transmis aux quatre emplacements de bit restant entre le bit de départ (A) et le bit d'arrêt (B).

3. Procédé suivant la revendication 1, caractérisé le fait qu'aux emplacements de bit prévus pour les bits caractéristiques (K) de la trame de signaux (ZR) est transmise une succession, revenant périodiquement, die $2^m$ bits caractéristiques (K1 à K16), parmi lesquels m bits caractéristiques successifs signalent respectivement l'association des bits de donnés (D) auxsources de données (DQ) (figure 2).

4. Procédé suivant la revendication 1, caractérisé par le fait que la trame de signaux (ZR) contient huit emplacements de bit, avec un bit d'arrêt respectif au niveau du septième et du huitième emplacements de bit.

# FIG 1

# FIG 2

# FIG 3